# EUROPÄISCHE PATENTANMELDUNG

(11) **EP 2 383 069 A2**
(43) Veröffentlichungstag der Anmeldung: **02.11.2011**
(21) Anmeldenummer: 11163606.4
(22) Anmeldetag: 22.04.2011
(51) Int. Cl.: B23K 26/24

(54) **Verfahren und Vorrichtung zum Herstellen eines Bleches mit einem aufgeschweißten Rohr**

(30) Priorität: 27.04.2010 AT 6942010
(71) Anmelder: DTEC GmbH, 4582 Spital am Pyhrn (AT)
(72) Erfinder: Dietl, Michael, 4582 Spital am Pyhrn (AT); Teufel, Arnold, 6372 Oberndorf (AT)
(74) Vertreter: Wirnsberger, Gernot

(57) **Zusammenfassung**

Die Erfindung betrifft ein Verfahren zum Herstellen eines Bleches (7) mit einem aufgeschweißten Rohr (6), das zumindest teilweise gekrümmte Abschnitte aufweist, wobei das Rohr (6) durch zumindest ein Führungselement (2) auf das Blech (7) geführt, an dieses mit zumindest einem Andrückelement (3) angedrückt und auf diesem zumindest punktweise aufgeschweißt wird und wobei das Rohr (6) zur Ausbildung der gekrümmten Abschnitte gebogen wird. Um das Aufschweißen auch in den gekrümmten Abschnitten auf einfache Weise zu erreichen, ist erfindungsgemäß vorgesehen, dass ein Biegen in einer Vielzahl diskreter Schritte erfolgt, wobei in einzelnen Schritten zuerst das Rohr (6) mit dem zumindest einen Führungselement (2) um eine zuletzt geschaffene Schweißstelle gebogen wird und danach eine neue Schweißstelle geschaffen wird. Des Weiteren betrifft die Erfindung eine Vorrichtung (1) zum Durchführen dieses Verfahrens.

## Beschreibung

Die Erfindung betrifft ein Verfahren zum Herstellen eines Bleches mit einem aufgeschweißten Rohr, das zumindest teilweise gekrümmte Abschnitte aufweist, wobei das Rohr durch zumindest ein Führungselement auf das Blech geführt, an dieses mit zumindest einem Andrückelement angedrückt und auf diesem zumindest punktweise aufgeschweißt wird und wobei das Rohr zur Ausbildung der gekrümmten Abschnitte gebogen wird.

Des Weiteren betrifft die Erfindung eine Vorrichtung zum Herstellen eines Bleches mit einem aufgeschweißten Rohr, das zumindest teilweise gekrümmte Abschnitte aufweist, umfassend zumindest ein Führungselement, durch welches das Rohr führbar und durch welches Biegekräfte auf das Rohr übertragbar sind, zumindest ein Andrückelement, welches im Anschluss an das zumindest eine Führungselement angeordnet ist und das zugeführte Rohr an das Blech andrückt, und zumindest eine seitlich des zumindest einen Andrückelementes angeordnete Schweißeinrichtung, mit der in einem Bereich einer Berührungslinie des Rohres und des Bleches das Rohr unterhalb des zumindest einen Andrückelementes zumindest punktweise auf dem Blech aufschweißbar ist.

Die oben erwähnten Bleche mit aufgeschweißten Rohren werden allgemein als Wärmetauscher, beispielsweise als Flachabsorber, typischerweise in thermischen Solarkollektoren, verwendet. Dabei wird bei Flachabsorbern Wärme von dem durch absorbierte Sonnenstrahlung erhitzten Blech bzw. einer Absorberplatte auf ein aufgeschweißtes Rohr und von diesem weiter auf ein in dem Rohr befindliches flüssiges Wärmeträgermedium übertragen. Für eine hohe Effizienz des Flachabsorbers bzw. von Wärmetauschern allgemein ist eine gute Wärmeübertragung wichtig, die zumindest teilweise von einer Güte von Schweißverbindungen abhängt.

Gemäß dem Stand der Technik sind Verfahren zum Herstellen eines Bleches mit einem aufgeschweißten Rohr bekannt, wobei ein z. B. mäanderförmiges Rohr auf ein Blech angelegt und an diesem angeschweißt wird. In einem ersten Arbeitsgang wird das Rohr in eine gewünschte Form gebogen, in einem zweiten Arbeitsgang erfolgt ein Aufschweißen des aufgelegten vorgeformten Rohres auf dem Blech. In der DE 10 2005 001 435 A1 wird ein Verfahren dieser Art beschrieben, das ein Aufschweißen eines mäanderförmig gebogenen Rohres auf dem Blech auch in gekrümmten Abschnitten des Rohres ermöglicht. Dieses Verfahren liefert ein an sich gutes Ergebnis, allerdings geht heute der Trend im Hinblick auf ein möglichst effizientes Fertigungsverfahren dahin, dass das Rohr zum Aufschweißen auf dem Blech direkt von einem Coil abgenommen wird, ohne dieses zuvor in einem separaten Arbeitsgang in die gewünschte Form zu biegen. Die in der DE 10 2005 001 435 A1 offenbarte Methode hat den Nachteil, dass für das Biegen und Aufschweißen des Rohres zwei separate, nacheinander auszuführende Arbeitsgänge notwendig sind. Neben einem sich daraus ergebenden länger dauernden, komplizierteren, mehr Platz beanspruchenden und deshalb ineffizienten Verfahrensablauf ist auch nachteilig, dass ein durchgehender Kontakt zwischen Rohr und Blech nicht oder nur äußerst schwierig zu erreichen ist.

Aus dem Stand der Technik sind auch wie erwähnt Verfahren bekannt, wobei das Rohr nicht vorgebogen auf dem Blech angeordnet wird, sondern kontinuierlich von einem Coil zugeführt und gebogen wird. Bei einem in der WO 2006/065195 A1 beschriebenen Verfahren dieser Art zum Herstellen eines Wärmetauschers wird ein Rohr von einem Coil mittels Rollen auf ein Blech aufgebracht und bei einem geraden Verlauf des Rohres im selben Arbeitsgang auf dem Blech aufgeschweißt. Um einen gekrümmten Verlauf des Rohres zu erreichen, wird ein Schweißen unterbrochen und das Rohr mittels eines Biegerollenpaares in eine gewünschte Form gebogen. Nach dem Biegen wird das Aufschweißen des Rohres auf dem Blech in einem darauffolgenden geraden Abschnitt des Rohres fortgesetzt. Bei dem in der WO 2006/065195 A1 beschriebenen Verfahren wird zwar eine Zahl der Arbeitsgänge verringert, doch ergibt sich hier aus dem Prinzip des Verfahrens, dass ein Aufschweißen des Rohres auf dem Blech während des Biegens bzw. in den gekrümmten Abschnitten des Rohres nicht möglich ist: Eine Kontaktlinie zwischen Rohr und Blech wird in den gekrümmten Abschnitten durch angelegte Biegerollen verdeckt und ist somit für eine Schweißeinrichtung nicht zugänglich. Das Fehlen der Schweißstellen in den gekrümmten Abschnitten bewirkt eine schlechtere Wärmeübertragung zwischen Blech und Rohr. Das Aufschweißen des Rohres in den gekrümmten Abschnitten könnte zwar in einem separaten, nachfolgenden Arbeitsgang erfolgen, was aber wiederum zu einem lange dauernden, ineffizienten Verfahren führen würde.

Der Erfindung liegt demnach die Aufgabe zugrunde, ein Verfahren der eingangs genannten Art anzugeben, mit dem ein Aufschweißen eines Rohres auf einem Blech auch in gekrümmten Abschnitten des Rohres auf einfache Weise durchführbar ist.

Eine weitere Aufgabe der Erfindung ist es, eine Vorrichtung der eingangs genannten Art anzugeben, mit der ein Aufschweißen eines Rohres auf einem Blech auch in gekrümmten Abschnitten des Rohres auf einfache Weise durchführbar ist.

Die verfahrensmäßige Aufgabe der Erfindung wird bei einem Verfahren der eingangs erwähnten Art dadurch gelöst, dass ein Biegen in einer Vielzahl diskreter Schritte erfolgt, wobei in einzelnen Schritten zuerst das Rohr mit dem zumindest einen Führungselement um eine zuletzt geschaffene Schweißstelle gebogen wird und danach eine neue Schweißstelle geschaffen wird. Sofern beidseits des Rohres Schweißstellen geschaffen werden, erfolgt ein Biegen um gegenüberliegende, zuletzt geschaffene Schweißstellen.

Ein mit dem erfindungsgemäßen Verfahren erzielter Vorteil ist insbesondere darin zu sehen, dass das Aufschweißen des Rohres auf dem Blech auch in den gekrümmten Abschnitten des Rohres auf einfache Weise erreicht wird. Insbesondere erfolgt das Aufschweißen im selben Arbeitsgang wie das Biegen des Rohres. Da das Biegen in einer Vielzahl kleiner diskreter Schritte erfolgt, werden stabile Schweißstellen erzielt, um welche fortlaufend zugeführtes Rohr gebogen werden kann. Das zugeführte Rohr kann dann bzw. nach dem Biegen durch eine weitere Schweißstelle fixiert werden, ehe sich dieser Vorgang wiederholt. Biegen und Schweißen erfolgen somit gleichsam kontinuierlich während einer Bewegung der Fertigungsvorrichtung im selben Arbeitsgang auf einer oder beiden Seiten des Rohres. Man erreicht also eine annähernd kontinuierliche Fertigung eines Bleches mit einem auch in seinen gekrümmten Abschnitten auf- bzw. angeschweißten Rohr. Dabei wird die Erkenntnis ausgenutzt, dass das Rohr um eine geschaffene Schweißstelle gebogen werden kann, ohne dass sich das Rohr im Bereich der Schweißstelle oder gegebenenfalls Schweißstellen wieder löst. Typischerweise wird in jedem der diskreten Schritte zuerst das Rohr mit dem zumindest einen Führungselement um eine zuletzt geschaffene Schweißstelle gebogen und danach eine neue Schweißstelle geschaffen.

Um bereits geschaffene Schweißstellen beim Biegen des Rohres nicht zu stark zu belasten, hat es sich bewährt, dass ein Biegewinkel möglichst klein gehalten wird. Bevorzugt wird der Biegewinkel pro diskreten Schritt auf mehr als 0° bis 10° eingestellt, insbesondere 0,5° bis 2,5°.

Das Verfahren kann besonders effizient geführt werden, wenn das Rohr von einem Coil von oben auf das Blech geführt wird. Dadurch werden Verwindungen des zugeführten Rohres und damit unerwünschte Produktionsstillstände vermieden. Sofern es die Rahmenbedingungen erlauben, kann das Rohr aber auch seitlich zugeführt werden.

Weiter hat es sich bewährt, dass das Rohr mithilfe eines Führungsrohres auf das Blech geführt wird. Dadurch kann das Rohr gleichbleibend mit geringen Toleranzen und zielgerichtet zum Führungselement und zum Andrückelement geführt werden.

Es ist von besonderem Vorteil, wenn zumindest die zuletzt geschaffene Schweißstelle beim Biegen entlastet, insbesondere zug- und/oder druck- und/oder scherentlastet, wird. Die Schweißstellen werden dann beim Biegen mechanisch weniger beansprucht und haben eine bessere Qualität, was einer guten Wärmeübertragung zwischen Blech und Rohr förderlich ist.

Es hat sich bewährt, dass das Rohr mittels Laser bevorzugt beidseitig des Rohres auf dem Blech aufgeschweißt wird. Selbstverständlich können aber auch andere Arten des Schweißens Anwendung finden.

Die weitere Aufgabe wird dadurch gelöst, dass bei einer Vorrichtung der eingangs genannten Art eine Steuerungseinheit vorgesehen ist, welche die Vorrichtung so steuert, dass diese in den gekrümmten Abschnitten eine Vielzahl diskreter Schritte abfährt, wobei die Vorrichtung in einzelnen Schritten zuerst das Rohr mit dem zumindest einen Führungselement um eine zuletzt geschaffene Schweißstelle biegt und danach eine neue Schweißstelle schafft.

Ein mit der Erfindung erzielter Vorteil ist insbesondere darin zu sehen, dass diese ein Aufschweißen des Rohres auf dem Blech auch in gekrümmten Abschnitten auf einfache Weise ermöglicht. Von Vorteil ist insbesondere auch, dass mit einer erfindungsgemäßen Vorrichtung das Aufschweißen gleichsam im selben Arbeitsgang mit dem Biegen ausgeführt werden kann.

Es hat sich bewährt, dass zumindest ein Entlastungselement seitlich des zumindest einen Andrückelementes angeordnet ist. Durch ein solches Entlastungselement wird zumindest die zuletzt geschaffene Schweißstelle beim Biegen entlastet, insbesondere zug- und/oder druck- und/oder scherentlastet. Des Weiteren wird die Vorrichtung von dem zumindest einen Entlastungselement während des Biegens geführt, sodass ein stabiles Verhalten in den gekrümmten Abschnitten erreicht wird. Außerdem kann bei geeigneter Form des zumindest einen Entlastungselementes ein Nachformen der bereits aufgeschweißten, in diskreten Schritten erfolgten Biegung des Rohres erreicht werden.

Um diese Vorteile voll auszunutzen, hat es sich bewährt, dass zwei Entlastungselemente seitlich des zumindest einen Andrückelementes angeordnet sind.

Bevorzugt ist zumindest eine Schweißeinrichtung ein Laser.

Es ist von Vorteil, wenn zumindest ein Entlastungselement vorgesehen ist, das eine Ausnehmung aufweist, sodass ein Laserlichtstrahl in den Bereich der Berührungslinie des Rohres und des Bleches führbar ist.

Des Weiteren ist es von Vorteil, wenn ein Führungsrohr dem zumindest einen Führungselement vorgeordnet ist, welches das Rohr dem zumindest einen Führungselement und dem zumindest einen Andrückelement zuführt.

Diese und weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine schematische Draufsicht auf ein System zum Herstellen von Flachabsorbern;
Fig. 2 eine Seitenansicht einer erfindungsgemäßen Vorrichtung;
Fig. 3 einen Ablauf eines erfindungsgemäßen Verfahrens zum Herstellen von Flachabsorbern.

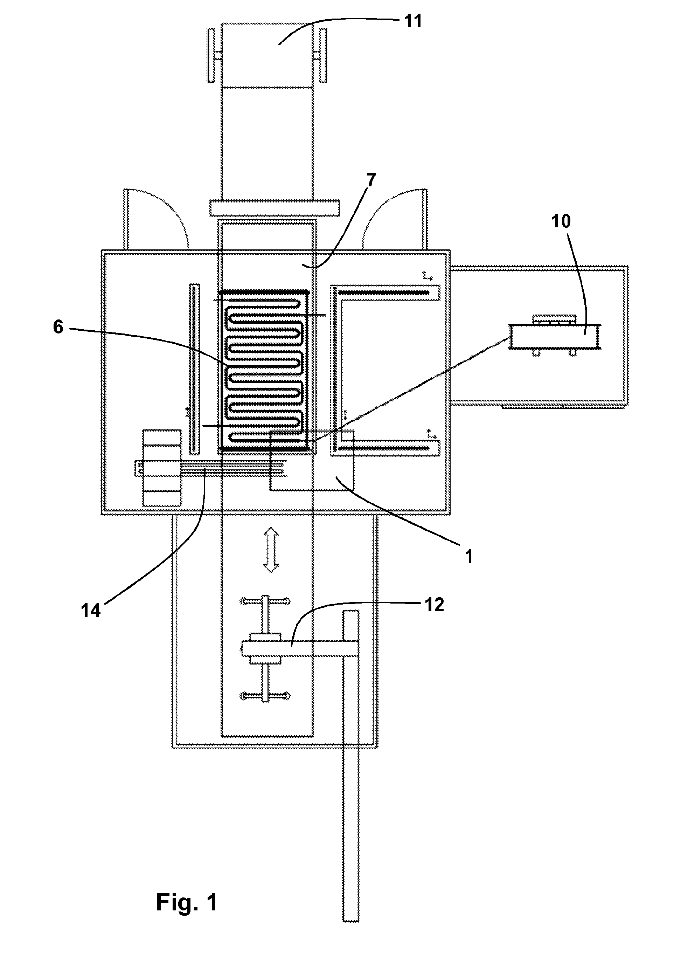

Die schematische Darstellung eines automatischen Manipulationssystems zum Herstellen von Flachabsorbern in Fig. 1 zeigt eine erfindungsgemäße Vorrichtung 1 zum Herstellen eines Bleches 7 mit einem aufgeschweißten Rohr 6. Zum Zuführen des Bleches 7 ist ein (Blech-)Coil 11 vorgesehen. Von diesem Coil 11 wird das Blech 7 abgerollt, abgelängt und unter der Vorrichtung 1 positioniert und fixiert. Das Rohr 6 wird von einem (Rohr-)Coil 10 abgerollt und der Vorrichtung 1 zugeführt. Die Vorrichtung 1 ist mit einem Roboterarm 14 verbunden und kann mit diesem verfahren werden.

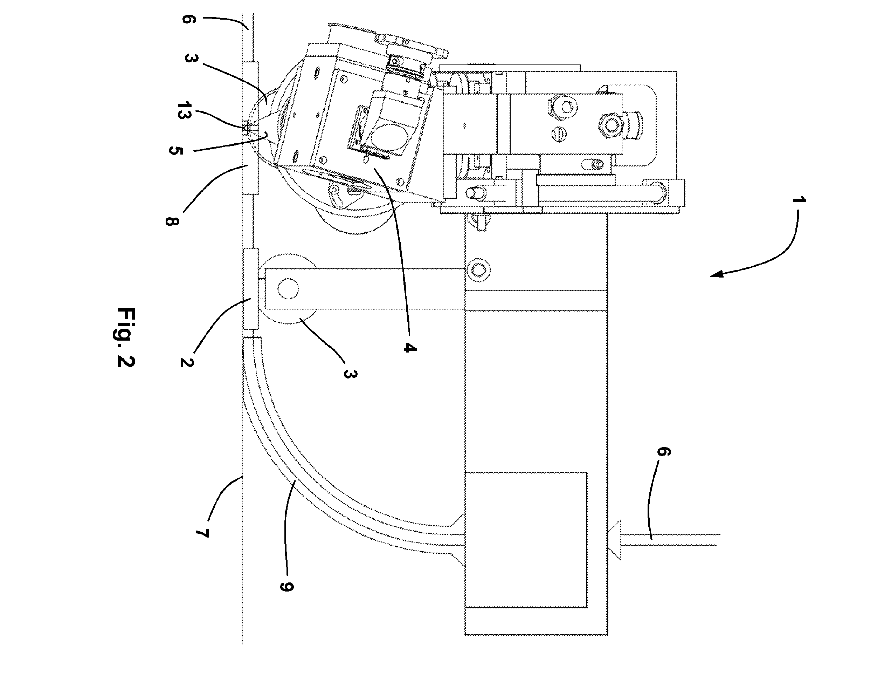

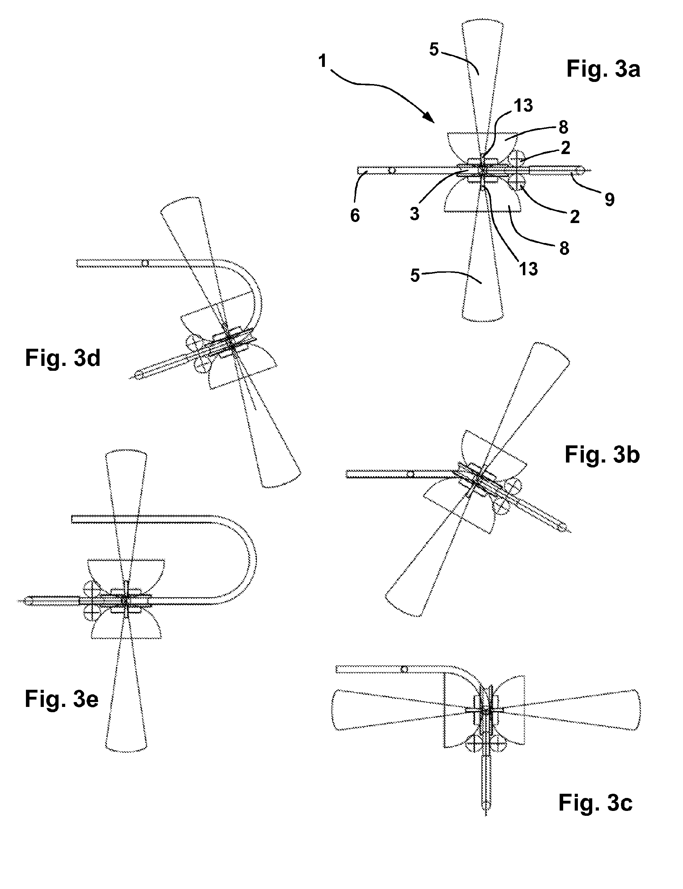

In Fig. 2 ist eine Seitenansicht der Vorrichtung 1 zum Herstellen eines Bleches 7 mit einem aufgeschweißten Rohr 6 gezeigt. Das Blech 7 und das Rohr 6 bestehen jeweils aus Aluminium oder einer Aluminiumlegierung, wiewohl auch andere Materialien zum Einsatz kommen können, beispielsweise Kupfer, Kupferlegierungen und/oder Stähle. Dabei liegen je zwei Schweißeinrichtungen 4, Laserlichtstrahlen 5, Entlastungselemente 8 und Führungselemente 2 symmetrisch zu einer senkrecht auf dem Blech 7 stehenden, durch das Rohr 6 gehenden Ebene, wie dies in Fig. 3 ersichtlich ist. Die Vorrichtung 1 umfasst ein nach oben zum in Fig. 2 nicht dargestellten Coil gerichtetes Führungsrohr 9, mit dem das Rohr 6 von oben auf das Blech 7 geführt wird, sowie Führungselemente 2, welche das Rohr 6 auf dem Blech 7 führen, des Weiteren Andrückelemente 3, die das Rohr 6 auf dem Blech 7 andrücken, sowie die erwähnten Schweißeinrichtungen 4 auf beiden Seiten eines Andrückelementes 3. Auf beiden Seiten eines Andrückelementes 3 befindet sich auch ein Entlastungselement 8 mit je einer Ausnehmung 13, durch welche jeweils ein Laserlichtstrahl 5 in den Bereich der Berührungslinie des Rohres 6 und des Bleches 7 führbar ist, um das Rohr 6 entlang einer Vielzahl von Schweißpunkten und/oder zumindest einer Schweißlinie auf dem Blech 7 aufzuschweißen. Dabei ist das Entlastungselement 8 bevorzugt seitlich der zuletzt geschaffenen Schweißstelle angeordnet. Das Rohr 6 wird über das Führungsrohr 9 und die Führungselemente 2 den Andrückelementen 3 kontinuierlich zugeführt, wo das Aufschweißen bzw. Fixieren auf dem Blech 7 durch die Schweißeinrichtungen 4 erfolgt.

Bei der Herstellung eines Flachabsorbers fährt die Vorrichtung 1 gesteuert bzw. programmiert eine gewünschte Form des Rohres 6 ab, wobei das Rohr 6 im selben Arbeitsgang gebogen und auch in seinen gekrümmten Abschnitten auf dem Blech 7 aufgeschweißt wird, ohne dabei die Gesamtbewegung der Vorrichtung 1 längere Zeit unterbrechen zu müssen. Nach Beendigung dieses Vorganges wird das Blech 7 mit dem aufgeschweißten Rohr 6 durch eine Entnahmevorrichtung 12 aus dem Manipulationssystem entnommen und es kann mit der Herstellung eines neuen Flachabsorbers begonnen werden.

In Fig. 3a bis 3e ist der Verfahrensablauf der Herstellung eines Bleches 7 mit einem aufgeschweißten Rohr 6 im Bereich eines gekrümmten Abschnittes des Rohres 6 in verschiedenen Phasen dargestellt. Das Blech 7 liegt dabei in der Zeichenebene. In Fig. 3a bewegt sich die Vorrichtung 1 entlang des Rohres 6 nach rechts. Die Vorrichtung 1 umfasst ein Führungsrohr 9, zwei Führungselemente 2, ein Andrückelement 3 sowie zwei Entlastungselemente 8 seitlich des Andrückelementes 3, welche je eine Ausnehmung 13 haben, durch welche Laserlichtstrahlen 5 in den Bereich der Berührungslinie des Rohres 6 und des Bleches 7 führbar sind. Die Entlastungselemente 8 haben hier in der Draufsicht der Einfachheit halber eine Form eines Halbkreises, der hintere Viertelkreis wäre aber ausreichend. Die Entlastungselemente 8 können aber auch eine beliebige andere Form haben, sofern diese entlastend wirken. Die Fig. 3b bis 3e zeigen nun die Ausbildung einer Rechtskurve des Rohres 6 durch die Vorrichtung 1 bei gleichzeitigem beidseitigen, also innen- und außenseitigen Aufschweißen bzw. Fixieren des Rohres 6 auf dem Blech 7 in dem gekrümmten Abschnitt. Biegen und Schweißen bzw. Fixieren erfolgen dabei während der Bewegung der Vorrichtung 1. Das Verfahren resultiert daher in einer quasi kontinuierlichen Fertigung bei minimierten Totzeiten.

In der bevorzugten Verfahrensvariante erfolgt das Biegen in einer Vielzahl diskreter Schritte, wobei in jedem Schritt zuerst das Rohr 6 mit den Führungselementen 2 um zwei beidseits des Rohres 6 zuletzt geschaffene Schweißstellen gebogen wird und danach zwei neue Schweißstellen geschaffen werden. Die resultierende Biegung des Rohres 6 wird dabei von der Zahl der diskreten Schritte, vom Biegewinkel in jedem diskreten Schritt und von den Schrittweiten der einzelnen diskreten Schritte bestimmt. Die Entlastungselemente 8 sind dabei bevorzugt seitlich der zuletzt geschaffenen Schweißstellen angeordnet, d. h., diese Elemente sind dem Andrückelement 3 nachgeordnet, was aber in der stark vereinfachten Darstellung in Fig. 3a bis 3e nicht erkennbar ist. Die Entlastungselemente 8 haben dreierlei Funktionen:
Erstens üben die Entlastungselemente 8 bei einer Drehung der Vorrichtung 1 und dem damit einhergehenden Biegen des Rohres 6 einen Gegendruck im Bereich der zuletzt geschaffenen Schweißstelle aus. Dies bewirkt eine Entlastung dieser Schweißstellen und führt damit zu einer höheren Qualität der Schweißstellen in den gekrümmten Abschnitten des Rohres 6. Zweitens bewirken die Entlastungselemente 8 entsprechend deren halbkreisförmigen Ausbildung eine verbesserte Führung der Vorrichtung 1 entlang des gebogenen Rohres 6. Das Verfahren zeigt damit ein stabileres Verhalten in den gekrümmten Abschnitten des Rohres 6. Drittens bewirken bei Abstimmung der Form bzw. des Krümmungsradius der Entlastungselemente 8 auf die Form bzw. den

Krümmungsradius des gekrümmten Abschnittes des Rohres 6 die Entlastungselemente 8 ein Nachformen der in den einzelnen diskreten Schritten erfolgten Biegungen des Rohres 6. Hierzu ist es von Vorteil, wenn die Entlastungselemente 8 einfach auswechselbar sind.

Insgesamt ergibt der beschriebene Verfahrensablauf einen quasi kontinuierlichen Fertigungsprozess gleichsam ohne Stopp.

Eine weitere Verfahrensvariante ist dadurch gekennzeichnet, dass das Aufschweißen des Rohres 6 während des Biegens entlang zumindest einer Schweißlinie erfolgt. Bei einer entsprechenden Form der Entlastungselemente 8 bewirken diese ein kontrolliertes, kontinuierliches Biegen des Rohres 6 entsprechend deren Form bzw. deren Krümmungsradius.

Ein Anpressdruck eines oder mehrerer Andrückelemente 3 auf das Rohr 6 kann in den geraden Abschnitten so gesteuert werden, dass das Rohr 6, das in der Regel aus Aluminium oder einer Aluminiumlegierung besteht, in diesen Abschnitten verformt wird, z. B. im Querschnitt zu einer Ellipse oder einem Trapez. Dadurch kann eine Kontaktfläche zum Blech 7 vergrößert und eine Leistung erhöht werden. In den gekrümmten Abschnitten hingegen wird ein Anpressdruck vermindert, da in diesen Abschnitten das Rohr 6 in seiner ursprünglichen runden Form aufzutragen ist, weil ein geformtes Rohr praktisch nicht um einen kleinen Radius zu biegen ist.

## Patentansprüche

1. Verfahren zum Herstellen eines Bleches (7) mit einem aufgeschweißten Rohr (6), das zumindest teilweise gekrümmte Abschnitte aufweist, wobei das Rohr (6) durch zumindest ein Führungselement (2) auf das Blech (7) geführt, an dieses mit zumindest einem Andrückelement (3) angedrückt und auf diesem zumindest punktweise aufgeschweißt wird und wobei das Rohr (6) zur Ausbildung der gekrümmten Abschnitte gebogen wird, **dadurch gekennzeichnet, dass** ein Biegen in einer Vielzahl diskreter Schritte erfolgt, wobei in einzelnen Schritten zuerst das Rohr (6) mit dem zumindest einen Führungselement (2) um eine zuletzt geschaffene Schweißstelle gebogen wird und danach eine neue Schweißstelle geschaffen wird.

2. Verfahren nach Anspruch 1, **dadurch gekennzeichnet, dass** in jedem der diskreten Schritte zuerst das Rohr (6) mit dem zumindest einen Führungselement (2) um eine zuletzt geschaffene Schweißstelle gebogen und danach eine neue Schweißstelle geschaffen wird.

3. Verfahren nach Anspruch 1 oder 2, **dadurch gekennzeichnet, dass** ein Biegewinkel pro diskreten Schritt auf mehr als 0° bis 10° eingestellt wird.

4. Verfahren nach Anspruch 3, **dadurch gekennzeichnet, dass** der Biegewinkel pro diskreten Schritt auf 0,5° bis 2,5° eingestellt wird.

5. Verfahren nach einem der Ansprüche 1 bis 4, **dadurch gekennzeichnet, dass** das Rohr (6) von einem Coil (10) von oben auf das Blech (7) geführt wird.

6. Verfahren nach einem der Ansprüche 1 bis 5, **dadurch gekennzeichnet, dass** das Rohr (6) mithilfe eines Führungsrohres (9) auf das Blech (7) geführt wird.

7. Verfahren nach einem der Ansprüche 1 bis 6, **dadurch gekennzeichnet, dass** zumindest die zuletzt geschaffene Schweißstelle beim Biegen entlastet, insbesondere zug- und/oder druck- und/oder scherentlastet, wird.

8. Verfahren nach einem der Ansprüche 1 bis 7, **dadurch gekennzeichnet, dass** das Rohr (6) mittels Laser bevorzugt beidseitig des Rohres (6) aufgeschweißt wird.

9. Vorrichtung (1) zum Herstellen eines Bleches (7) mit einem aufgeschweißten Rohr (6), das zumindest teilweise gekrümmte Abschnitte aufweist, umfassend zumindest ein Führungselement (2), durch welches das Rohr (6) führbar und durch welches Biegekräfte auf das Rohr (6) übertragbar sind, zumindest ein Andrückelement (3), welches im Anschluss an das zumindest eine Führungselement (2) angeordnet ist und das zugeführte Rohr (6) an das Blech (7) andrückt, und zumindest eine seitlich des zumindest einen Andrückelementes (3) angeordnete Schweißeinrichtung (4), mit der in einem Bereich einer Berührungslinie des Rohres (6) und des Bleches (7) das Rohr (6) unterhalb des zumindest einen Andrückelementes (3) zumindest punktweise auf dem Blech (7) aufschweißbar ist, **dadurch gekennzeichnet, dass** eine Steuerungseinheit vorgesehen ist, welche die Vorrichtung (1) so steuert, dass diese in den gekrümmten Abschnitten eine Vielzahl diskreter Schritte abfährt, wobei die Vorrichtung (1) in einzelnen Schritten zuerst das Rohr (6) mit dem zumindest einen Führungselement (2) um eine zuletzt geschaffene Schweißstelle biegt und danach eine neue Schweißstelle schafft.

10. Vorrichtung (1) nach Anspruch 9, **dadurch gekennzeichnet, dass** zumindest ein Entlastungselement (8) seitlich des zumindest einen Andrückelementes (3) angeordnet ist.

11. Vorrichtung (1) nach Anspruch 10, **dadurch gekennzeichnet, dass** zwei Entlastungselemente (8) seitlich des zumindest einen Andrückelementes (3) angeordnet sind.

12. Vorrichtung (1) nach einem der Ansprüche 9 bis 11, **dadurch gekennzeichnet, dass** die zumindest eine Schweißeinrichtung (4) ein Laser ist.

13. Vorrichtung (1) nach Anspruch 12, **dadurch gekennzeichnet, dass** zumindest ein Entlastungselement (8) vorgesehen ist, das eine Ausnehmung (13) aufweist, sodass ein Laserlichtstrahl (5) in den Bereich der Berührungslinie des Rohres (6) und des Bleches (7) führbar ist.

14. Vorrichtung (1) nach einem der Ansprüche 9 bis 13, **dadurch gekennzeichnet, dass** ein Führungsrohr (9) dem zumindest einen Führungselement (2) vorgeordnet ist, welches das Rohr (6) dem zumindest einen Führungselement (2) und dem zumindest einen Andrückelement (3) zuführt.
